(19) Europäisches Patentamt
European Patent Office
Office européen des brevets

(11) **EP 4 410 474 B1**

(12) **EUROPÄISCHE PATENTSCHRIFT**

(45) Veröffentlichungstag und Bekanntmachung des Hinweises auf die Patenterteilung:
**15.10.2025   Patentblatt 2025/42**

(21) Anmeldenummer: **24000013.3**

(22) Anmeldetag: **01.02.2024**

(51) Internationale Patentklassifikation (IPC):
*B23Q 1/26* (2006.01)    *B23Q 1/48* (2006.01)
*B23Q 16/02* (2006.01)    *B23Q 16/08* (2006.01)

(52) Gemeinsame Patentklassifikation (CPC):
**B23Q 16/026; B23Q 1/26; B23Q 1/4852; B23Q 1/4871; B23Q 16/024; B23Q 16/083**

(54) **GETAKTETE VERSTELLEINHEIT**

CLOCKED ADJUSTING UNIT

UNITÉ DE RÉGLAGE CADENCÉE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **02.02.2023   DE 102023000321**

(43) Veröffentlichungstag der Anmeldung:
**07.08.2024   Patentblatt 2024/32**

(73) Patentinhaber:
• **Zimmer, Günther**
  **77866 Rheinau (DE)**
• **Zimmer, Martin**
  **77866 Rheinau (DE)**

(72) Erfinder:
• **Zimmer, Günther**
  **77866 Rheinau (DE)**
• **Zimmer, Martin**
  **77866 Rheinau (DE)**

(74) Vertreter: **Thämer, Wolfgang**
  **Zürn & Thämer**
  **Patentanwälte**
  **Adalbert-Stifter-Straße 12**
  **76275 Ettlingen (DE)**

(56) Entgegenhaltungen:
EP-A2- 1 136 175    US-A- 2 736 204
US-A- 4 180 238

**Beschreibung**

Die Erfindung betrifft eine getaktete Verstelleinheit mit zwei Linear-Schubeinheiten.

Aus der EP 1 136 175 A2 ist eine getaktete Verstelleinheit mit zwei Linear-Schubeinheiten bekannt, wobei jede der Linear-Schubeinheiten jeweils eine Betätigungsklinke aufweist, wobei ein drehbar gelagerter Schaft mittels jeder der Betätigungsklinken antreibbar ist und wobei jeder einzelnen der Linear-Schubeinheiten jeweils genau eine von zwei Hubrichtungen des Schafts zugeordnet ist.

Aus der DE 100 63 191 A1 ist eine Ausgleichsvorrichtung für Roboterschweißzangen bekannt. Die Ausgleichsvorrichtung hat eine Zylinder-Kolbeneinheit und begrenzt den Aufschwenkwinkel der Schweißzangen.

Um das Höhenniveau von Werkstücken auszugleichen oder anzupassen, werden im Allgemeinen Ausgleichsbleche, Ausgleichskeile, etc. eingesetzt. Das einzelne Werkstück wird manuell mittels dieser Ausgleichstücke ausgerichtet.

Der vorliegenden Erfindung liegt die Problemstellung zugrunde, das Ausrichten des Höhenniveaus eines Werkstücks zu vereinfachen.

Diese Problemstellung wird mit den Merkmalen des Hauptanspruches gelöst. Dazu weist jede der Linear-Schubeinheiten jeweils eine Betätigungsklinke auf. Eine drehbar gelagerte, eine Hubspindel steuernde Spindelmutter ist mittels jeder der Betätigungsklinken antreibbar. Jeder einzelnen der Linear-Schubeinheiten ist jeweils genau eine von zwei Hubrichtungen der Hubspindel zugeordnet.

Die getaktete Verstelleinheit hat zwei Antriebseinheiten, die jeweils eine Linear-Schubeinheit mit einer Betätigungsklinke aufweisen. Mittels der Betätigungsklinke wird eine Spindelmutter um einen konstruktiv vorgegebenen Winkel geschwenkt oder gedreht. Dieser Schritt kann mehrfach wiederholt erfolgen. Die Spindelmutter treibt mittels eines Schraubgetriebes eine Hubspindel an. Die Hubspindel wird dabei in ihrer axialen Richtung bewegt. Eine der Linear-Schubeinheiten wird eingesetzt, um die Hubspindel taktweise anzuheben. Die andere Linear-Schubeinheit wird eingesetzt, um die Hubspindel getaktet abzusenken.

Weitere Einzelheiten der Erfindung ergeben sich aus den Unteransprüchen und der nachfolgenden Beschreibung schematisch dargestellter Ausführungsformen.

Figur 1: Pneumatisch getaktete Verstelleinheit;
Figur 2: Längsschnitt der Verstelleinheit aus Figur 1;
Figur 3: Schnitt der Verstelleinheit durch die Pneumatikkanäle;
Figur 4: Schnitt des Antriebs der Verstelleinheit;
Figur 5: Längsschnitt des Gehäusegrundkörpers;
Figur 6: Kolbeneinheit mit Betätigungsklinke;
Figur 7: Unteransicht von Figur 6;
Figur 8: Betätigungsklinke;
Figur 9: Spindelmutter;
Figur 10 Hubspindelgruppe;
Figur 11: Hubbalken;
Figur 12: Hubüberwachung;
Figur 13: Pneumatikschaltplan;
Figur 14: Gehäusegruppe bei Beginn des Förderns;
Figur 15: Gehäusegruppe bei ausgefahrener Zylinder-Kolbeneinheit;
Figur 16: Rückhub der Zylinder-Kolben-Einheit;
Figur 17: Elektromagnetisch getaktete Verstelleinheit;
Figur 18: Schnitt des Antriebs von Figur 17.

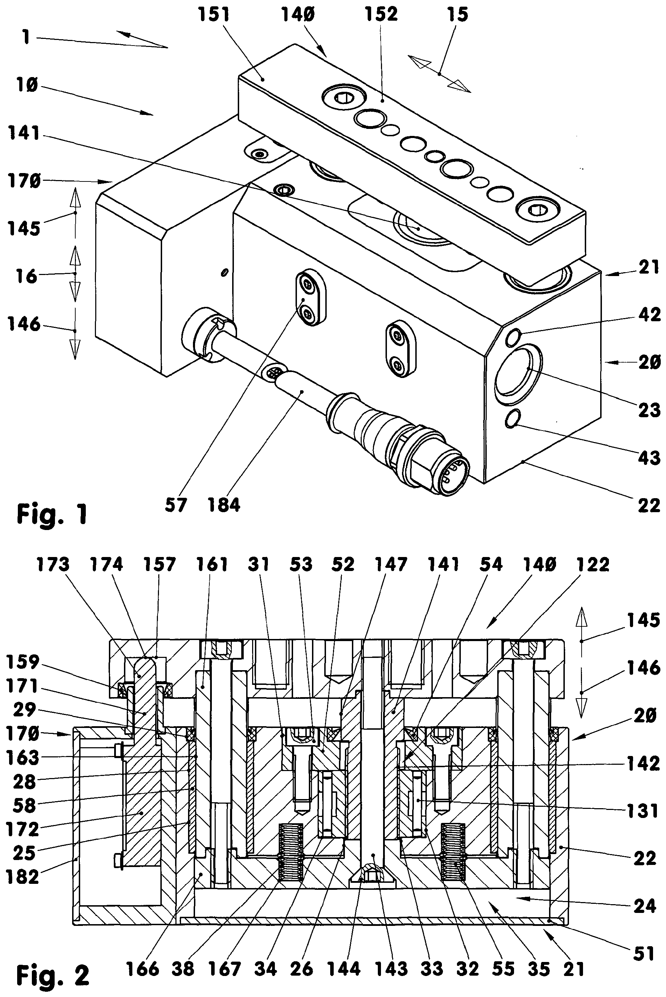

Die Figuren 1 - 16 zeigen eine getaktete Verstelleinheit (10) in der Bauform einer pneumatisch getakteten Verstelleinheit (10). Derartige Verstelleinheiten (10) werden beispielsweise zum Ausrichten der Höhenlage von Werkstücken für nachfolgende automatisierte Fügebearbeitungen eingesetzt. So können z.B. Karosseriebleche trotz vorhandener Toleranzen so ausgerichtet werden, dass sie anschließend mittels einer automatisierten Schweißzange gefügt werden können.

Die in den Figuren dargestellte Verstelleinheit (10) hat eine Gehäusegruppe (20) und eine relativ hierzu verstellbare Hubspindel (141). Im Ausführungsbeispiel ist die Hubspindel (141) Teil einer Hubspindelgruppe (140). Der linear orientierte Hub der Hubspindelgruppe (140) relativ zur Gehäusegruppe (20) beträgt im Ausführungsbeispiel 6 Millimeter. Die Hubspindel (141) wird hierbei in einer ersten Hubrichtung (145) gegenüber der Gehäusegruppe (20) ausgefahren. In einer zweiten Hubrichtung (146) wird die Hubspindel (141) eingefahren. Auch ein Hub von 10 Millimeter ist denkbar. An der Gehäusegruppe (20) ist beispielsweise eine Hubüberwachungsgruppe (170) angeordnet.

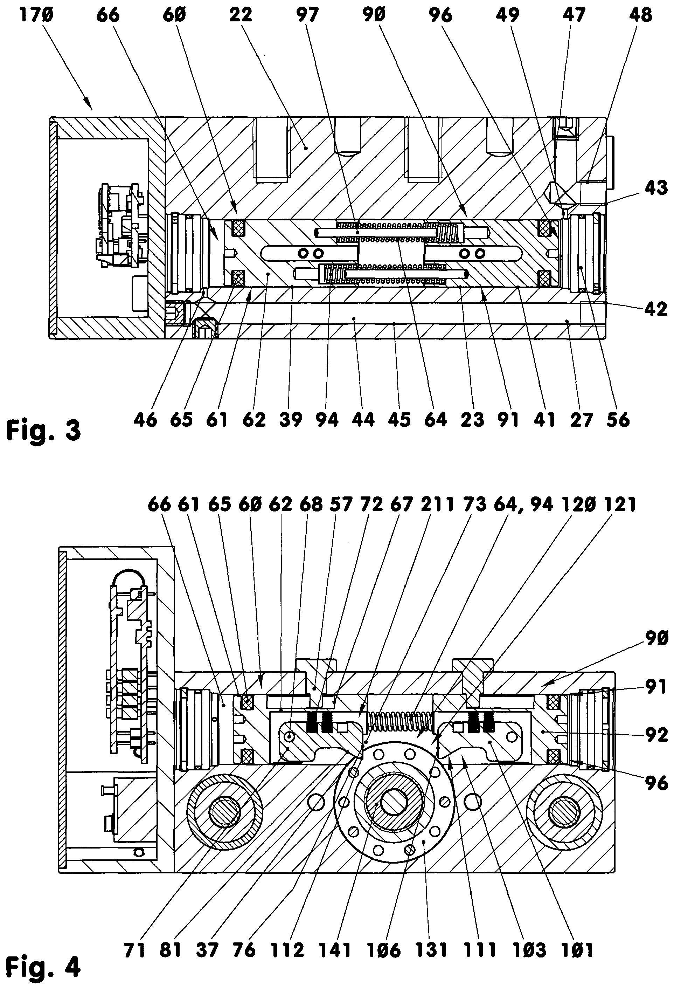

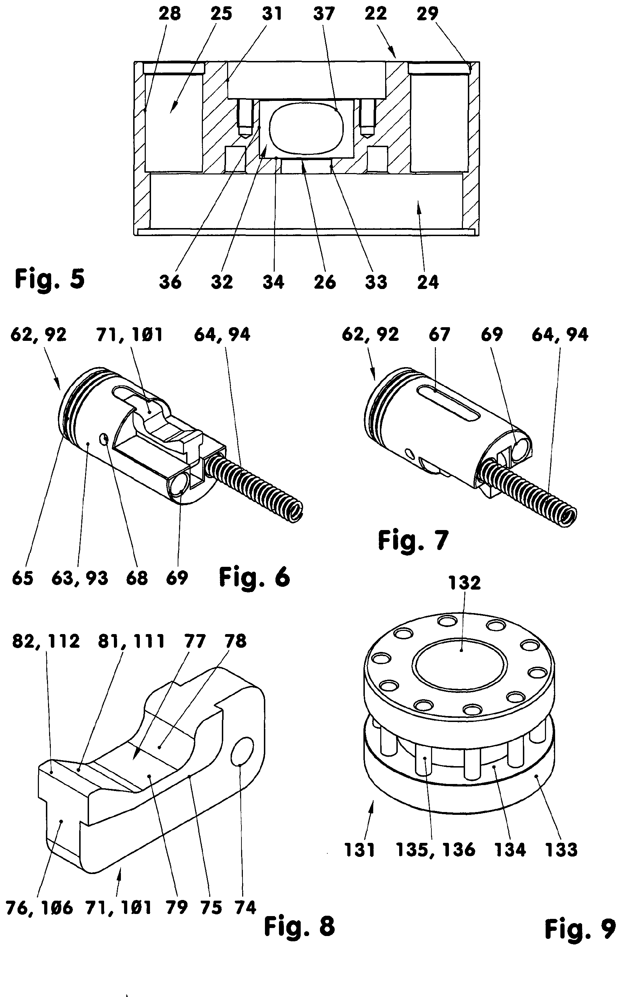

Die Figur 2 zeigt einen Längsschnitt der Verstelleinheit (10) entlang ihrer vertikalen Mittenlängsebene. Die Figur 5 zeigt mit derselben Schnittebene einen Längsschnitt eines Gehäusegrundkörpers (22) der Gehäusegruppe (20). In der Figur 3 ist ein zu dieser Schnittebene paralleler Schnitt durch die Antriebseinheiten (60, 90) dargestellt. Die Figur 4 zeigt einen Längsschnitt des Gehäuses durch die Antriebseinheiten (60, 90), wobei die Schnittebene normal zu den Schnittebenen der Figuren 2, 3, und 5 liegt.

Die Gehäusegruppe (20) hat als tragendes Bauteil ein Gehäuse (21). Das Gehäuse (21) bildet in diesem Ausführungsbeispiel den ortsfesten Teil von zwei pneumatische Antriebseinheiten (60, 90), die mit einem zweistufigen Getriebe (120) zusammenwirken.

Das Gehäuse (21), vgl. die Figuren 1 - 4, ist zumindest annähernd quaderförmig ausgebildet. Es weist den Gehäusegrundkörper (22) auf, der mittels eines Bodenteils (51) und eines Deckelteils (52) verschlossen ist. Der Gehäusegrundkörper (22), vgl. die Figuren 2 - 5 hat eine Längsbohrung (23), eine Balkenaufnahme (24), zwei Führungsaufnahmen (25), eine Spindeltriebaufnahme (26) und Medienleitungen (27).

Die Balkenaufnahme (24) und die Führungsaufnahmen (25) sind symmetrisch zur vertikalen Mittenlängsebene der Gehäusegruppe (20) ausgebildet. Die Balkenaufnahme (24) ist beispielsweise quaderförmig ausgebildet. Bei montierter Verstelleinheit (10) ist sie mittels des Bodenteils (51) verschlossen.

In die Balkenaufnahme (24) münden die Führungsaufnahmen (25). Die beiden Führungsaufnahmen (25) sind symmetrisch zu einer vertikalen Mittelquerebene der Gehäusegruppe (20) angeordnet. Die Führungsaufnahmen (25) haben jeweils eine zylindrisch ausgebildete Lageraufnahme (28) und eine an die Oberseite der Gehäusegruppe (20) angrenzende Dichtungsaufnahme (29).

Die Spindeltriebaufnahme (26) ist mittig zwischen den Führungsaufnahmen (25) angeordnet. Sie ist mehrstufig ausgebildet. Sie hat eine Deckelteilaufnahme (31), eine Spindelmutteraufnahme (32) und eine Spindelsicherungsaufnahme (33). Die Deckelteilaufnahme (31) ist zumindest annährend quaderförmig ausgebildet. In der montierten Verstelleinheit (10) ist in der Deckelteilaufnahme (31) das Deckelteil (52) mittels z.B. zwei Deckelteil-Befestigungsschrauben (53) befestigt. An seiner Oberseite trägt das Deckelteil (52) einen Wellendichtring (54), der das Eindringen von Verschmutzungen in den Innenraum (35) der Gehäusegruppe (20) verhindert. In der Unterseite des Deckelteils (52) sind beispielsweise hier nicht dargestellte Gleitscheiben eingesetzt.

Die Spindelmutteraufnahme (32) wird in vertikaler Richtung mittels des Deckelteils (52) und einer Spindelmutteranlage (34) begrenzt. Die Spindelmutteranlage (34) ist eine ebene Fläche, die normal zur Höhenrichtung (16) der Verstelleinheit (10) angeordnet ist. Es ist auch denkbar, in den Gehäusegrundkörper (22) Gleitscheiben einzusetzen. Diese sind dann beispielsweise so ausgebildet wie die Gleitscheiben des Deckelteils (52). Auch eine andere Ausbildung der Lagerung der Spindelmutter (131) ist denkbar.

In radialer Richtung ist die Spindelmutteraufnahme (32) mittels einer weitgehend zylindrisch ausgebildeten Gehäusewandung (36) begrenzt. In einer Eingriffsausnehmung (37) ist die Spindelmutteraufnahme (32) mit der Längsbohrung (23) verbunden. Im Ausführungsbeispiel überstreicht die Eingriffsausnehmung (37) einen Sektor von 100 Grad. Die Mittelachse des Sektors fällt mit der Mittelachse der Spindeltriebaufnahme (26) zusammen.

Die Spindelsicherungsaufnahme (33) verbindet als zylindrische Bohrung die Spindelmutteraufnahme (32) mit der Balkenaufnahme (24). An der Unterseite des Gehäusegrundkörpers (22) sind zwei Hub-Rückstellfederaufnahmen (38) ausgebildet. Dies sind zylinderförmige Einsenkungen, in die bei montierter Verstelleinheit (10) jeweils eine Hub-Rückstellfeder (55) eingesetzt ist.

Die Längsbohrung (23) durchdringt den Gehäusegrundkörper (22) in der Längsrichtung (15). Bei zusammengebauter Verstelleinheit (10) ist die Längsbohrung (23) an ihren beiden Enden mittels Verschlussstopfen (56) abgedichtet verschlossen. Zwischen den Verschlussstopfen (56) hat die Längsbohrung (23) eine z.B. konstante Querschnittsfläche. Die Eingriffsausnehmung (37) unterteilt die Längsbohrung (23) in einen ersten Abschnitt (39) und in einen zweiten Abschnitt (41), die jeweils an einen der Verschlussstopfen (56) angrenzen.

An der der Hubüberwachungsgruppe (170) abgewandten Stirnseite des Gehäusegrundkörpers (22) sind zwei Medienanschlüsse (42, 43) angeordnet. Ein erster, im Gehäusegrundkörper (22) geführter Medienkanal (44) besteht aus einem ersten, an den ersten Medienschluss (42) angrenzenden Längskanal (45) und einem ersten Querkanal (46). Der erste Medienkanal (44) mündet in den ersten Abschnitt (39) der Längsbohrung (23) unmittelbar neben dem zugehörigen Verschlussstopfen (56).

An den zweiten Medienanschluss (43) schließt der zweite Medienkanal (47) an. Auch dieser hat einen Längskanal (48) und einen Querkanal (49). Der zweite Medienkanal (47) mündet in den zweiten Abschnitt (41) des Längskanals (23) unmittelbar neben dem zugehörigen Verschlussstopfen (56).

Die beiden pneumatischen Antriebseinheiten (60, 90) haben jeweils eine in der Längsbohrung (23) geführte Stößeleinheit (62; 92). Die Stößeleinheiten (62, 92) dieses Ausführungsbeispiels sind Kolbeneinheit (62, 92). Die beiden Kolben-einheiten (62, 92) sind beispielsweise aus zueinander identischen Bauteilen aufgebaut. Eine erste Kolbeneinheit (62) sitzt längsverschieblich im ersten Abschnitt (39) der Längsbohrung (23). Die zweite Kolbeneinheit (92) ist in der Längsrichtung (15) verschiebbar im zweiten Abschnitt (41) der Längsbohrung (23) angeordnet. Die einzelne Kolbeneinheit (62; 92) bildet zusammen mit der Längsbohrung (23) des Gehäusegrundkörpers (22) eine Linear-Schubeinheit (61; 91) in der Bauform einer Zylinder-Kolben-Einheit (61; 91). Es ist auch denkbar, z.B. jeweils eine aus einem Zylinder und der Kolbeneinheit (62; 92) bestehende Zylinder-Kolben-Einheit in den Gehäusegrundkörper (22) einzusetzen.

Die Figuren 6 und 7 zeigen eine Kolbeneinheit (62; 92) in zwei isometrischen Ansichten. Die einzelne Kolbeneinheit (62; 92) hat einen Stößelkörper (63; 93) in der Bauform eines Kolbenkörpers (63; 93), eine Betätigungsklinke (71; 101) und zwei z.B. gemeinsame Stößelrückstellfedern (64; 94). Der Kolbenkörper (63; 93) trägt eine Kolbendichtung (65). Diese ist als Doppeldichtung ausgelegt. Bei zusammengebauter Verstelleinheit (10) liegt die Kolbendichtung (65) an der Wandung der Längsbohrung (23) an. Der einzelne Kolbenkörper (63; 93) grenzt in der Längsbohrung (23) einen zwischen dem Verschlussstopfen (56) und den Kolbenkörper (63; 93) angeordneten Druckraum (66; 96) von der Umgebung (1) ab.

Im Kolbenkörper (63; 93) ist eine Führungsnut (67) eingeprägt. Diese ist in der Längsrichtung (15) der Verstelleinheit (10) orientiert. Bei montierter Verstelleinheit (10) greift ein am Gehäusegrundkörper (22) befestigter Führungsstift (57) in die Führungsnut (67) ein. Der Führungsstift (57) und die Führungsnut (67) begrenzen den Hub der jeweiligen Kolbeneinheit (62; 92) der Zylinder-Kolben-Einheit (61; 91). Im Ausführungsbeispiel beträgt der Hub der einzelnen Kolbeneinheit (62; 92) relativ zum Gehäuse (21) 10 Millimeter.

Im Kolbenkörper (63; 93) ist eine Betätigungsklinke (71; 101) schwenkbar gelagert. Zur Lagerung dient ein Schwenkstift (68), der den Kolbenkörper (63; 93) und die Betätigungsklinke (71; 101) durchdringt. Die Betätigungsklinke (71; 101) wird zusätzlich mittels zwei Klinkenfedern (72) relativ zum Kolbenkörper (63; 93) in eine Schubstellung (73; 103) belastet.

An der der Kolbendichtung (65) abgewandten Stirnseite hat der Kolbenkörper (63; 93) zwei Federeinsenkungen (69). Jede der Federeinsenkungen (69) nimmt eine Stößelrückstellfeder (64; 94) auf, die sich am Kolbenkörper (93; 93) der jeweiligen anderen Kolbeneinheit (92; 62) abstützt. Die Stößelrückstellfedern (64, 94) sind im Folgenden auch als Kolbenrückstellfedern (64, 94) bezeichnet. Die beiden Kolbenrückstellfedern (64, 94) sind als Druckfedern ausgebildet. Ein Knicken der Kolbenrückstellfedern (64, 94) wird mittels jeweils eines Führungsstifts (97) verhindert. Bei unbelastetem Druckraum (66; 96) wird die zugehörige Kolbeneinheit (62; 92) in Richtung des jeweiligen Verschlussstopfens (56) belastet.

In der Figur 8 ist eine Betätigungsklinke (71; 101) dargestellt. Die Betätigungsklinke (71; 101) ist symmetrisch zu ihrer vertikalen Mittenlängsebene ausgebildet. Sie hat eine Durchgangsbohrung (74) zur Aufnahme des Schwenkstifts (68). An den Seitenflächen ist jeweils ein Schwenkanschlag (75) in Form eines Absatzes ausgebildet. Die der Durchgangsbohrung (74) abgewandte Stirnseite der Betätigungsklinke (71; 101) ist im Folgenden als Schubflanke (76; 106) bezeichnet. Die Schubflanke (76; 106) ist im dargestellten Ausführungsbeispiel als ebene Fläche ausgebildet.

An der Oberseite der Betätigungsklinke (71; 101) ist eine Aufnahmesenke (77) ausgebildet. Die Aufnahmesenke (77) wird von einer Halteflanke (78), einer Anlageflanke (79) und einer Rückschlagflanke (81; 111) begrenzt. Diese gehen ineinander über. Die Rückschlagflanke (81; 111) ist beispielsweise als ebene Fläche ausgebildet. Die Rückschlagflanke (81; 111) und die Schubflanke (76; 106) begrenzen eine abgerundete Klinkenrundung (82; 112). Im Ausführungsbeispiel schließen die Rückschlagflanke (81; 111) und die Schubflanke (76; 106) einen Winkel von 60 Grad ein. Die Scheitellinie dieses Winkels liegt außerhalb der Klinkenrundung (82; 112).

Die Figur 9 zeigt eine Spindelmutter (131). Die Spindelmutter (131) hat im Ausführungsbeispiel eine zylindrische Hüllkontur und ein zentrales Innengewinde (132). Im Ausführungsbeispiel hat das Innengewinde (132) einen Nenndurchmesser von 12 Millimeter. Beispielsweise ist das Innengewinde (132) als Feingewinde mit einer Steigung von einem Millimeter ausgebildet. Auch eine Steigung von 0,5 Millimetern ist denkbar. Die Steigung ist die Entfernung zwischen dem Anfangspunkt und dem Endpunkt einer Windung der Schraubenlinie. Die Steigung des Innengewindes (132) beträgt z.B. mindestens 1/48 und maximal 3/24 des Nenndurchmessers des Innengewindes (132).

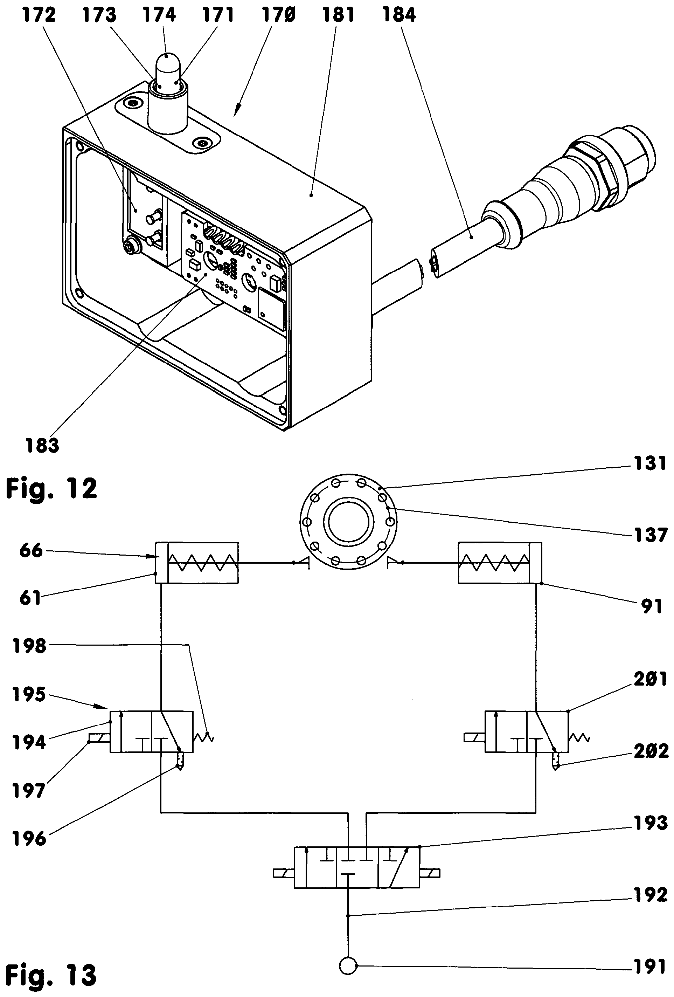

Die Spindelmutter (131) hat einen Mutterkörper (133) mit einer umlaufenden Ringnut (134). Die Ringnut (134) hat im Ausführungsbeispiel gerade Flanken. In der Ringnut (134) sitzen z.B. zehn identische Mitnahmestifte (135, 136) auf einem gemeinsamen Teilkreis (137), vgl. Figur 13. Der Durchmesser ($d_{TK}$) des Teilkreises (137) beträgt im Ausführungsbeispiel 20 Millimeter. Der Durchmesser des einzelnen Mitnahmestifts (135; 136) beträgt im Ausführungsbeispiel ein Zehntel dieses Durchmessers.

Für den Mindesthub ($h_{min}$) jeder der Zylinder-Kolben-Einheiten (61; 91) gilt:

$$h_{min} > d_{TK} * \sin (\pi / n)$$

mit $d_{TK}$: Teilkreisdurchmesser der Mitnahmestifte
$\pi$: Kreiszahl
n: Anzahl der Mitnahmestifte

Der Mindesthub ($h_{min}$) jeder der Zylinder-Kolben-Einheiten (61; 91) ist größer als das Produkt aus dem Teilkreisdurchmessers (dTK) der Mitnahmestifte (135, 136) und dem Sinus aus dem Quotienten der Kreiszahl ($\pi$) und der Anzahl der Mitnahmestifte (135, 136). Im Ausführungsbeispiel beträgt der Hub jeder der Zylinder-Kolben-Einheiten (61; 91) das 1,62-fache des Mindestwerts.

In der jeweiligen Antriebseinheit (60; 90) bildet die Zylinder-Kolben-Einheit (61; 91) mit der Betätigungsklinke (71; 101) und der Spindelmutter (131) eine erste Getriebestufe (121) des Getriebes (120). Mittels dieser ersten Getriebestufe (121) wird eine lineare Bewegung der jeweiligen Kolbeneinheit (62; 92) in eine rotatorische Bewegung der Spindelmutter (131) umgewandelt.

Die Spindelmutter (131) ist mit ihrem Innengewinde (132) auf ein Außengewinde (142) der Hubspindel (141) aufgeschraubt. Das Schraubgetriebe der Spindelmutter (131) und der Hubspindel (141) bildet eine zweite Getriebestufe (122) des Getriebes (120). Oberhalb des Außengewindes (142) hat die Hubspindel (141) einen Dichtbund (147). An diesem liegt der Wellendichtring (54) des Deckelteils (52) an. Die Hubspindelgruppe (140) mit der Hubspindel (141) ist verdrehsicher in der Gehäusegruppe (20) gelagert und in der Höhenrichtung (16) linear geführt.

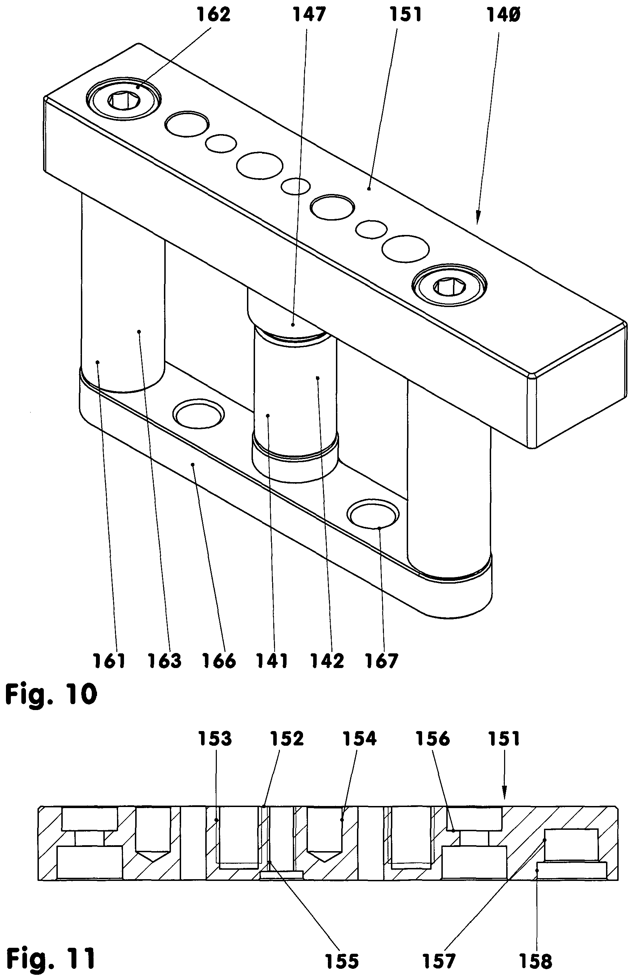

Die Figur 10 zeigt die Hubspindelgruppe (140). Die Hubspindel (141) sitzt zwischen einem obenliegenden Hubbalken (151) und einem untenliegenden Führungsbalken (166). Eine Hubspindelschraube (143) liegt mit ihrem Schraubenkopf (144) am Führungsbalken (166) an, durchdringt die Hubspindel (141) und ist im Hubbalken (151) befestigt, vgl. Figur 2. Der Führungsbalken (166) sitzt in der Höhenrichtung (16) verschiebbar in der Balkenaufnahme (24) des Gehäusegrundkörpers (22). Die beiden Hub-Rückstellfedern (55) stützten sich in Federausnehmungen (167) des Führungsbalkens (166) ab.

Symmetrisch zur vertikalen Mittenquerebene der Gehäusegruppe (20) sind zwei Führungssäulen (161) angeordnet. Die Führungssäulen (161) sind mittels jeweils einer Befestigungsschraube (162) starr mit dem Hubbalken (151) und mit dem Führungsbalken (166) verbunden. Die einzelne Führungssäule (161) hat in der Höhenrichtung (16) einen konstanten kreisförmigen Querschnitt. Beispielsweise sind die Mantelflächen (163) der Führungssäulen (161) poliert ausgeführt.

In der zusammengebauten Verstelleinheit (10) sind die Führungssäulen (161) jeweils in den Hubrichtungen (145, 146) verschiebbar in jeweils einer Gleitlagerhülse (58) geführt. Die jeweilige Gleitlagerhülse (58) sitzt im Gehäusegrundkörper (22).

Der Hubbalken (151), vgl. Figur 11, ist quaderförmig ausgebildet. An seiner Oberseite (152) hat er mehrere Befestigungsgewinde (153) und Zentrierstiftaufnahmen (154). An diesen können beispielsweise Kontursteine befestigt werden, die an die Kontur der aufzunehmenden Karosseriebleche angepasst sind.

Die in der Längsrichtung (15) orientierte Länge des Hubbalkens (151) entspricht im Ausführungsbeispiel der Summe der Länge der Gehäusegruppe (20) und der Hubüberwachungsgruppe (170) in dieser Längsrichtung (15). Im Hubbalken (151), vgl. Figur 11, sind ein Befestigungsgewinde (155) für die Hubspindelschraube (143) sowie zwei Schraubensitzflächen (156) für die Befestigungsschrauben (162) angeordnet. Im äußeren Bereich des Hubbalkens (151) hat dieser eine nach unten offene Pinolenaufnahme (157). Die Pinolenaufnahme (157) ist beispielsweise eine zylinderförmige zweistufige Ausnehmung. In der unteren Ausnehmungsstufe (158) sitzt bei montierter Verstelleinheit (10) ein Wellendichtring (159).

Die Figur 12 zeigt die Hubüberwachungsgruppe (170) bei abgenommenen Schutzdeckel (182) eines Schutzgehäuses (181). Die Hubüberwachungsgruppe (170) hat einen Positionssensor (171). Dieser ist im Ausführungsbeispiel als hubabhängiger, linearer Potentiometer ausgebildet. Sein elektrischer Widerstand beträgt zwischen einem Kiloohm und 150 Kiloohm bei einem Hub von 12,5 Millimetern. Das Ausgangssignal des Positionssensors (171) ist abhängig von seinem momentanen Hub. Das Ausgangssignal kann den Hub der z.B. proportional, progressiv, degressiv, etc. abbilden.

Der Positionssensor (171) hat einen Grundkörper (172) und eine ausfahrbare Pinole (173). Die Pinole (173) ist mittels einer Feder in eine ausgefahrene Endlage belastet. Der Kopf (174) der Pinole (173) ist halbkugelförmig ausgebildet. Bei montierter Verstelleinheit (10) liegt der Kopf (174) der Pinole (173) in der Pinolenaufnahme (157) des Hubbalkens (151). Der Hub des Positionssensors (171) entspricht damit dem Hub der Hubspindel (141).

Der Grundkörper (172) des Positionssensors (171) und ein Teil der Pinole (173) sind im Schutzgehäuse (181) angeordnet. In dem Schutzgehäuse (181) ist eine elektrische Umwandlungseinheit (183) angeordnet. Mittels der elektrischen Umwandlungseinheit (183) wird z.B. das Ausgangssignal des Positionssensors (171) in ein von der übergeordneten Steuerung verarbeitbares Datenprotokoll umgewandelt. Die Übertragung zur übergeordneten Steuerung erfolgt z.B. über eine unidirektionale oder bidirektionale asymmetrische Schnittstelle. Das Datenprotokoll ist im Ausführungsbeispiel z.B. als LAN, IO-Link®, etc. ausgebildet. Die Schnittstelle kann beispielsweise als parallele oder serielle Schnittstelle ausgebildet sein. Mittels einer Daten- und Signalleitung (184) werden die so aufbereiteten Ist-Daten des Positionssensors (171) mittels einer Punkt-zu-Punkt-Verbindung an die übergeordnete Steuerung übertragen.

Es ist auch denkbar, eine drahtlose Schnittstelle zwischen der Hubüberwachungsgruppe (170) und der übergeordneten Steuerung auszubilden. Die Übertragung kann dann beispielsweise in einem Frequenzbereich von 2,4 Gigahertz oder 5,8 Gigahertz erfolgen. In diesem Fall kann das Datenprotokoll z.B. als UART, Bluetooth, WLAN, IO-Link® wireless, etc. ausgebildet sein.

Die Hubüberwachungsgruppe (170) kann eine Rechen- und Auswerteeinheit aufweisen. Beispielsweise kann die pneumatische Ansteuerung der Verstelleinheit (10) in die Hubüberwachungsgruppe (170) integriert sein. Diese kann zusammen mit der Hubüberwachungsgruppe (170) als Regelkreis aufgebaut sein. Nach Vorgabe eines Sollwerts für den Hub wird die Verstelleinheit (10) gestartet. Sobald der Sollwert erreicht ist, wird der Hubwert oder das Erreichen des Sollwerts an die übergeordnete Steuerung übermittelt.

Die Hubüberwachungsgruppe (170) kann eine Programmspeichereinheit aufweisen. In den einzelnen gespeicherten Ablaufprogrammen ist beispielsweise der vorgesehene Hub der Hubspindel (141), die vorgesehene momentane Hubbeschleunigung und Hubgeschwindigkeit, etc. hinterlegt. Beim Betrieb wird beispielsweise von der übergeordneten Steuerung eines der Verstell-Ablaufprogramme aufgerufen. Nach der Übermittlung des z.B. binären Startsignals wird das Ablaufprogramm gestartet. Sobald der Sollwert erreicht ist, wird ein Bestätigungssignal an die übergeordnete Steuerung übermittelt. Dies kann z.B. ein binäres Signal sein. Die bidirektionale Signalübertragung kann auch in diesem Fall leitungsgebunden oder drahtlos erfolgen.

In der Figur 13 ist ein vereinfachter pneumatischer Schaltplan der Ansteuerung der pneumatisch getakteten Verstelleinheit (10) dargestellt. Von einer Druckquelle (191) aus führt eine Versorgungsleitung (192) zu einem Vorventil (193). Dieses ist beispielsweise ein 3/3 Wegeventil (193) mit Sperr-Nullstellung. Die einzelnen Schaltstellungen sind beispielsweise elektromagnetisch schaltbar. Gegebenenfalls kann das Vorventil (193) federbelastet in die Sperr-Nullstellung zurückgestellt werden. Von der Sperr-Nullstellung aus ist das Vorventil (193) alternativ entweder in eine erste Betriebsstellung für die erste Zylinder-Kolben-Einheit (61) oder in eine zweite Betriebsstellung für die zweite Zylinder-Kolben-Einheit (91) schaltbar.

In der ersten Betriebsstellung ist dem Vorventil (193) ein erstes Betriebsventil (194) nachgeschaltet. Das erste Betriebsventil (194) ist im Ausführungsbeispiel ein elektromagnetisch betätigtes 3/2-Wegeventil mit Federrückstellung. Das Betriebsventil (194) hat eine Druckstellung und die in der Figur 13 dargestellte Entleerungsstellung (195). In der Entleerungsstellung (195) ist dem Betriebsventil (194) ein in die Umgebung (1) ableitender Schalldämpfer (196) nachgeschaltet.

Das erste Betriebsventil (194) ist mit dem Druckraum (66) der ersten Zylinder-Kolben-Einheit (61) hydraulisch verbunden. Sobald das Vorventil (193) in die erste Betriebsstellung geschaltet ist und das Betriebsventil (194) in die Druckstellung geschaltet ist, wird der Druckraum (66) der ersten Zylinder-Kolben-Einheit (61) mit pneumatischem Druck aus der Druckquelle (191) beaufschlagt. Beim Umschalten des Betriebsventils (194) in die Entleerungsstellung (195) verschieben die Kolben-Rückstellfedern (64, 94) die Kolbeneinheit (62) relativ zum Zylinder der Zylinder-Kolben-Einheit (61). Der Druckraum (66) wird komprimiert und über den Schalldämpfer (196) entleert. Die einzelne Zylinder-Kolben-Einheit (61; 91) ist damit einfachwirkend ausgebildet.

In der zweiten Betriebsstellung ist dem Vorventil (193) ein zweites Betriebsventil (201) nachgeschaltet. Das zweite Betriebsventil (201) ist im Ausführungsbeispiel so aufgebaut wie das erste Betriebsventil (194). In seiner Druckstellung wird der Druckraum (96) der zweiten Zylinder-Kolben-Einheit (91) belastet. In der dargestellten Entleerungsposition wird der Druckraum (96) der einfach wirkenden zweiten Zylinder-Kolben-Einheit (91) über den zweiten Schalldämpfer (202) entleert.

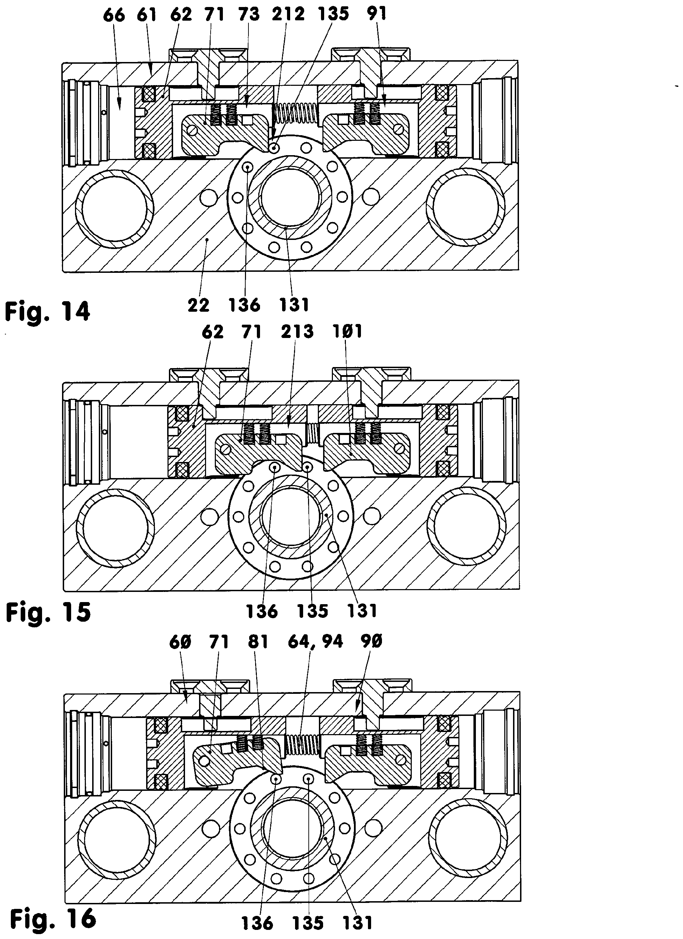

Die Figuren 14 - 16 zeigen Schnitte der Gehäusegruppe (20) bei einem Antriebstakt. Sobald beispielsweise die erste Zylinder-Kolben-Einheit (61) mit pneumatischen Druck beaufschlagt wird, wird die erste Kolbeneinheit (62) aus der in der Figur 4 dargestellten Ausgangslage (211) in die in der Figur 14 dargestellte Kontaktlage (212) verschoben. Der erste Druckraum (66) wird vergrößert. Die Betätigungsklinke (71) legt sich mit ihrer Schubflanke (76) an einen ersten Mitnahmestift (135) der Spindelmutter (131) an. Die Kolbenrückstellfedern (64, 94) werden komprimiert. Die zweite Zylinder-Kolben-Einheit (91) verbleibt in Ruhe.

Beim Fortsetzen der Druckbeaufschlagung wird die erste Kolbeneinheit (62) aus der Darstellung der Figur 14 weiter gegen die Kraft der Kolbenrückstellfedern (64, 94) nach rechts verschoben. Die erste Betätigungsklinke (71) verschiebt hierbei den ersten Mitnahmestift (135), bis die Kolbeneinheit (62) die in der Figur 15 dargestellte Kolbenendlage (213) erreicht. Der an der Betätigungsklinke (71) anliegende Mitnahmestift (135) ist jetzt beispielsweise um eine Teilung weitergedreht. Die Spindelmutter (131) wurde hierbei beispielsweise derart gedreht, dass die Hubspindel (141) weiter aus der Gehäusegruppe (20) herausgefahren wird. Hierbei wird die Hubspindelgruppe (140) angehoben.

Sobald die Kolbeneinheit (62) die in der Figur 15 dargestellte Kolbenendlage (213) erreicht hat, wird die Bestromung der Magnetspule (197) des ersten Betriebsventils (194) abgeschaltet. Die Spindelmutter (131) wird nicht weiter gedreht. Das erste Betriebsventil (194) schaltet mittels der Ventilfeder (198) in die Entleerungsstellung (195). Dieses Umschalten kann zeitgesteuert erfolgen. Es ist aber auch denkbar, am oder im Gehäusegrundkörper (22) z.B. einen End- oder Näherungsschalter anzuordnen, der bei Erreichen der Kolbenendlage (213) ein Umschalten des jeweiligen Betriebsventils (194; 201) auslöst. Bei in oder unmittelbar an der Verstelleinheit (10) angeordneten Betriebsventilen (194, 201) kann die Ventilsteuerung in der Hubüberwachungsgruppe (170) vorgesehen sein. Auch ist es denkbar, die in der Kolbenendlage (213) mittels der Hubüberwachung (170) ermittelte Position des Hubbalkens (151) für die Umsteuerung des Betriebsventils (194; 201) einzusetzen.

Nach dem Umschalten des Betriebsventils (194) in die Entleerungsstellung (195) wird der pneumatische Druck im Druckraum (66) der ersten Zylinder-Kolben-Einheit (61) vermindert. Die Kolbenrückstellfedern (64, 94) schieben die erste Kolbeneinheit (62) in Richtung der in der Figur 4 dargestellten Ausgangslage (211). Die Spindelmutter (131) und die Hubspindel (141) stehen still. Ein zweiter Mitnahmezapfen (136) der Spindelmutter (131) kontaktiert die Rückschlagflanke (81) der Betätigungsklinke (71), vgl. Figur 16. Beim weiteren Einfahren der Kolbeneinheit (62) wird die Betätigungsklinke (71) um den Schwenkstift (68) geschwenkt. Hierbei werden die Klinkenfedern (72) belastet. Die Betätigungsklinke (71) gleitet mit der Rückschlagflanke (81) und der Klinkenrundung (82) entlang des zweiten Mitnahmezapfens (136). Sobald die Betätigungsklinke (71) den zweiten Mitnahmezapfen (136) verlassen hat, wird die Betätigungsklinke (71) mittels der sich entspannenden Klinkenfedern (72) in ihre Schublage (76) zurückgestellt. Die Spindelmutter (131) und die Hubspindel (141) werden während des Rückhubs der ersten Kolbeneinheit (62) nicht bewegt. Beispielsweise wird die erste Kolbeneinheit (62) in die in der Figur 4 dargestellte Ausgangslage (211) zurückbewegt.

Zeitgesteuert oder aufgrund eines Freigabesignals eines zweiten End- oder Näherungsschalters kann nun der nächste Takt erfolgen, bei dem mittels des zweiten Mitnahmezapfens (136) die Spindelmutter (131) um einen weiteren Teilschritt gedreht wird. Die Hubspindel (141) wird entsprechend weiter angehoben.

Der vorgesehene Hub der Hubspindel (141) ist erreicht, wenn die Hubüberwachung (170) ein entsprechendes Signal ausgibt. Der für die Signalausgabe zu erreichende Hub kann einstellbar sein.

Um die Hubspindel (141) abzusenken, verbleibt die erste Zylinder-Kolben-Einheit (61) in der Ausgangslage (211). Mittels des Vorventils (193) und des zweiten Betriebsventils (201) wird die zweite Zylinder-Kolben-Einheit (91) angesteuert. Die Hubbewegung der zweiten Kolbeneinheit (92) dreht die Spindelmutter (131) in den Darstellungen der Figuren 14 - 16 entgegen dem Uhrzeigersinn. Die Hubspindel (141) wird abgesenkt. Die Hubüberwachung kann so erfolgen, wie im Zusammenhang mit der Betätigung der ersten Zylinder-Kolben-Einheit (61) beschrieben.

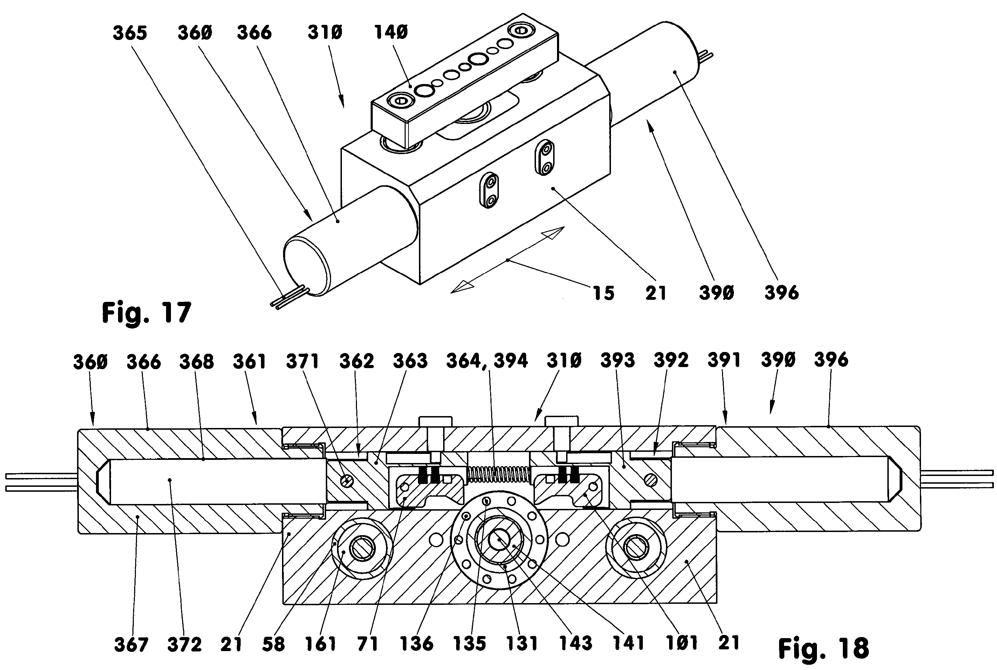

Die Figuren 17 und 18 zeigen eine weitere Variante einer getakteten Verstelleinheit (310). Die Schnittebene der Figur 18 entspricht der Schnittebene der Figur 4 des ersten Ausführungsbeispiels. Die Antriebseinheiten (360, 390) weisen in dieser Variante als Linear-Schubeinheit (361; 391) jeweils eine Elektromagneteinheit (361; 391) auf. Die einzelne Elektromagneteinheit (361; 391) ist mittels zweier elektrischer Leitungen (365) an eine Stromquelle anschließbar. Jede der Elektromagneteinheiten (361; 391) ist einzeln z.B. mittels eines impulsgesteuerten, selbstrückstellenden Tasters wiederholt für jeweils ein Zeitintervall einschaltbar.

Jede der Elektromagneteinheiten (361; 391) hat einen Zylindertopf (366; 396) und eine Stößeleinheit (362; 392). Der Zylindertopf (366; 396) hat in seiner Wandung (367) eine elektrische Spule, die an die elektrischen Leitungen (365) angeschlossen ist. Im dargestellten Ausführungsbeispiel ist der Zylindertopf (366; 396) jeweils von außen in das Gehäuse (21) eingeschraubt. Seine Öffnung (368) zeigt in das Gehäuse (21).

Die einzelne Stößeleinheit (362; 392) hat einen Stößelkörper (363; 393), in dem die zugeordnete Betätigungsklinke (71; 101) jeweils schwenkbar gelagert ist. Die Betätigungsklinke (71; 101) und ihre Lagerung sind so ausgebildet, wie im Zusammenhang mit dem ersten Ausführungsbeispiel beschrieben. Am Stößelkörper (363; 393) ist jeweils mittels eines Verbindungsstiftes (371) ein Führungskörper (372) gelagert. Der Führungskörper (371) ist zylindrisch ausgebildet. Er ist im Zylindertopf (366; 396) in der Längsrichtung (15) verschiebbar gelagert. Beispielsweise besteht der Führungskörper (372) aus einem Weicheisenmaterial.

Zwischen den beiden Stößelkörpern (363, 393) sind auch in diesem Ausführungsbeispiel zwei Stößelrückstellfedern (364, 394) angeordnet. Diese sind so ausgebildet und angeordnet wie die im Zusammenhang mit dem ersten Ausführungsbeispiel beschriebenen Stößelrückstellfedern (64, 94).

Das Getriebe (120) und die Hubspindelgruppe (140) und sämtliche sonstigen Bauteile sind beispielsweise weitgehend so ausgebildet, wie im Zusammenhang mit dem ersten Ausführungsbeispiel beschrieben.

Die in diesen Figuren 17 und 18 dargestellte getaktete Verstelleinheit (310) ist ohne Hubüberwachungsgruppe (170) ausgebildet. Es ist aber denkbar, auch die elektromagnetisch getaktete Verstelleinheit (310) mit einer Hubüberwachungsgruppe (170) auszubilden. Diese ist dann beispielsweise so ausgebildet, wie im Zusammenhang mit dem ersten Ausführungsbeispiel beschrieben.

Zum Anheben des Hubbalkens (151) wird beispielsweise die erste Antriebseinheit (360) mehrmals hintereinander für jeweils ein kurzes Zeitintervall bestromt. Die elektrische Spule baut ein Magnetfeld auf. Der Führungskörper (372) und mit ihm die gesamte Stößeleinheit (362) werden in der Darstellung der Figur 18 nach rechts verschoben. Die Betätigungsklinke (71) dreht die Spindelmutter (131) um ein Inkrement im Uhrzeigersinn. Die Hubspindel (141) hebt den Hubbalken (151) an. Die einzelne Antriebseinheit (360) mit der Linear-Schubeinheit (361), der Spindelmutter (131) und der Hubspindel (141) ist auch in diesem Ausführungsbeispiel einfachwirkend ausgebildet. Nach dem Abschalten der Bestromung der elektrischen Spule wird die Stößeleinheit (362) mittels der Kolbenrückstellfedern (364, 394) zurückgestellt. Bei der nächsten Bestromung der elektrischen Spule wird der nächste Takt ausgeführt.

Das Absenken des Hubbalkens (151) erfolgt mittels der Betätigung der zweiten Antriebseinheit (390).

Bezugszeichenliste:

1 Umgebung

10 Verstelleinheit, pneumatisch getaktet

15 Längsrichtung
16 Höhenrichtung

20 Gehäusegruppe
21 Gehäuse
22 Gehäusegrundkörper
23 Längsbohrung
24 Balkenaufnahme
25 Führungsaufnahmen
26 Spindeltriebaufnahme
27 Medienleitungen
28 Lageraufnahme
29 Dichtungsaufnahme

31 Deckelteilaufnahme
32 Spindelmutteraufnahme
33 Spindelsicherungsaufnahme
34 Spindelmutteranlage
35 Innenraum von (20)
36 Gehäusewandung
37 Eingriffsausnehmung
38 Hub-Rückstellfederaufnahmen

| | |
|---|---|
| 39 | erster Abschnitt von (23) |
| 41 | zweiter Abschnitt von (23) |
| 42 | Medienanschluss |
| 43 | Medienanschluss, zweiter Medienanschluss |
| 44 | Medienkanal, erster Medienkanal |
| 45 | Längskanal |
| 46 | Querkanal |
| 47 | Medienkanal, zweiter Medienkanal |
| 48 | Längskanal |
| 49 | Querkanal |
| 51 | Bodenteil |
| 52 | Deckelteil |
| 53 | Deckelteil-Befestigungsschrauben |
| 54 | Wellendichtring |
| 55 | Hub-Rückstellfeder |
| 56 | Verschlussstopfen |
| 57 | Führungsstift |
| 58 | Gleitlagerhülse |
| 60 | Antriebseinheit, erste Antriebseinheit |
| 61 | Linear-Schubeinheit, Zylinder-Kolben-Einheit, erste Zylinder-Kolben-Einheit |
| 62 | Stößeleinheit, Kolbeneinheit, erste Kolbeneinheit |
| 63 | Stößelkörper, Kolbenkörper |
| 64 | Stößelrückstellfeder, Kolbenrückstellfeder |
| 65 | Kolbendichtung |
| 66 | Druckraum |
| 67 | Führungsnut |
| 68 | Schwenkstift |
| 69 | Federeinsenkungen |
| 71 | Betätigungsklinke |
| 72 | Klinkenfedern |
| 73 | Schubstellung |
| 74 | Durchgangsbohrung |
| 75 | Schwenkanschlag |
| 76 | Schubflanke |
| 77 | Aufnahmesenke |
| 78 | Halteflanke |
| 79 | Anlageflanke |
| 81 | Rückschlagflanke |
| 82 | Klinkenrundung |
| 90 | Antriebseinheit, zweite Antriebseinheit |
| 91 | Linear-Schubeinheit, Zylinder-Kolben-Einheit, zweite Zylinder-Kolben-Einheit |
| 92 | Stößeleinheit, Kolbeneinheit, zweite Kolbeneinheit |
| 93 | Stößelkörper, Kolbenkörper |
| 94 | Stößelrückstellfeder, Kolbenrückstellfeder |
| 96 | Druckraum |
| 97 | Führungsstift |
| 101 | Betätigungsklinke |
| 103 | Schubstellung |

| | |
|---|---|
| 106 | Schubflanke |
| 111 | Rückschlagflanke |
| 112 | Klinkenrundung |
| 120 | Getriebe |
| 121 | erste Getriebestufe |
| 131 | Spindelmutter |
| 132 | Innengewinde |
| 133 | Mutterkörper |
| 134 | Ringnut |
| 135 | Mitnahmestifte, erster Mitnahmestift |
| 136 | Mitnahmestifte, zweiter Mitnahmestift |
| 137 | Teilkreis |
| 140 | Hubspindelgruppe |
| 141 | Hubspindel |
| 142 | Außengewinde |
| 143 | Hubspindelschraube |
| 144 | Schraubenkopf |
| 145 | Hubrichtung anheben |
| 146 | Hubrichtung absenken |
| 147 | Dichtbund |
| 151 | Hubbalken |
| 152 | Oberseite |
| 153 | Befestigungsgewinde |
| 154 | Zentrierstiftaufnahmen |
| 155 | Befestigungsgewinde |
| 156 | Schraubensitzflächen |
| 157 | Pinolenaufnahme |
| 158 | Ausnehmungsstufe |
| 159 | Wellendichtring |
| 161 | Führungssäulen |
| 162 | Befestigungsschraube |
| 163 | Mantelflächen |
| 166 | Führungsbalken |
| 167 | Federausnehmungen |
| 170 | Hubüberwachungsgruppe |
| 171 | Positionssensor |
| 172 | Grundkörper |
| 173 | Pinole |
| 174 | Kopf von (173) |
| 181 | Schutzgehäuse |
| 182 | Schutzdeckel |
| 183 | elektrische Umwandlungseinheit |
| 184 | Daten- und Signalleitung |
| 191 | Druckquelle |
| 192 | Versorgungsleitung |
| 193 | Vorventil, 3/3-Wegeventil |
| 194 | Betriebsventil, erstes Betriebsventil, 3/2-Wegeventil |
| 195 | Entleerungsstellung |
| 196 | Schalldämpfer |

| | |
|---|---|
| 197 | Magnetspule |
| 198 | Ventilfeder |
| | |
| 201 | Betriebsventil, zweites Betriebsventil |
| 202 | Schalldämpfer |
| | |
| 211 | Ausgangslage |
| 212 | Kontaktlage |
| 213 | Kolbenendlage |
| | |
| 310 | Verstelleinheit, elektromagnetisch getaktet |
| | |
| 360 | Antriebseinheit, erste Antriebseinheit |
| 361 | Linear-Schubeinheit, Elektromagneteinheit |
| 362 | Stößeleinheit |
| 363 | Stößelkörper |
| 364 | Stößelrückstellfedern |
| 365 | elektrische Leitungen |
| 366 | Zylindertopf |
| 367 | Wandung |
| 368 | Öffnung |
| | |
| 371 | Verbindungsstift |
| 372 | Führungskörper |
| 390 | Antriebseinheit |
| 391 | Linear-Schubeinheit, Elektromagneteinheit |
| 392 | Stößeleinheit |
| 393 | Stößelkörper |
| 394 | Stößelrückstellfedern |
| | |
| 396 | Zylindertopf |
| | |
| $d_{TK}$ | Durchmesser des Teilkreises [mm] |
| $h_{min}$ | Mindesthub von (61; 91) [mm] |
| $\pi$ | Kreiszahl |
| n | Anzahl von (135, 136) |

**Patentansprüche**

1. Getaktete Verstelleinheit (10, 310) mit zwei Linear-Schubeinheiten (61, 91; 361, 391),

   wobei jede der Linear-Schubeinheiten (61; 91; 361; 391) jeweils eine Betätigungsklinke (71; 101) aufweist,
   wobei eine drehbar gelagerte, eine Hubspindel (141) steuernde Spindelmutter (131) mittels jeder der Betätigungsklinken (71; 101) antreibbar ist und
   wobei jeder einzelnen der Linear-Schubeinheiten (61; 91; 361; 391) jeweils genau eine von zwei Hubrichtungen (145; 146) der Hubspindel (141) zugeordnet ist.

2. Getaktete Verstelleinheit (10) nach Anspruch 1, **dadurch gekennzeichnet, dass** die einzelne Linear-Schubeinheit (61; 91; 361; 391) eine Stößeleinheit (62; 92; 362; 392) mit einer darin schwenkbar gelagerten Betätigungsklinke (71; 101) hat.

3. Getaktete Verstelleinheit (10) nach Anspruch 2, **dadurch gekennzeichnet, dass** die Stößeleinheiten (62, 92; 362, 392) und die Spindelmutter (131) in einem gemeinsamen Gehäuse (21) angeordnet sind, aus dem die Hubspindel (141) herausragt.

4. Getaktete Verstelleinheit (10) nach Anspruch 3, **dadurch gekennzeichnet, dass** die Hubspindel (141) Teil einer Hubspindelgruppe (140) ist, die einen Hubbalken (151) aufweist und die in zwei im Gehäuse (21) mittels Gleitlagerhülsen (58) gelagerten Führungssäulen (161) geführt ist.

5. Getaktete Verstelleinheit (10) nach Anspruch 4, **dadurch gekennzeichnet, dass** der Hubbalken (151) in die absenkende Hubrichtung (146) gegenüber dem Gehäuse (21) mittels zweier Hub-Rückstellfedern (55) federbelastet ist.

6. Getaktete Verstelleinheit (10) nach Anspruch 1, **dadurch gekennzeichnet, dass** jede der Linear-Schubeinheiten (61; 91; 361; 391) einfachwirkend ausgebildet ist und mindestens eine Stößelrückstellfeder (64; 94; 364; 394) hat.

7. Getaktete Verstelleinheit (10) nach Anspruch 1, **dadurch gekennzeichnet, dass** die einzelne Betätigungsklinke (71; 101) eine Schubflanke (76; 106) und eine Rückschlagflanke (81; 111) hat.

8. Getaktete Verstelleinheit (10) nach Anspruch 2, **dadurch gekennzeichnet, dass** die einzelne Betätigungsklinke (71; 101) mittels mindestens einer Klinkenfeder (72) relativ zu einem Stößelkörper (63; 93; 363; 393) der Stößeleinheit (62; 92; 362; 392) in eine Schubstellung (73; 103) belastet ist.

9. Getaktete Verstelleinheit (10) nach Anspruch 1, **dadurch gekennzeichnet, dass** die Spindelmutter (131) mit den Betätigungsklinken (71, 101) kontaktierbare Mitnahmestifte (135, 136) hat.

10. Getaktete Verstelleinheit (10) nach Anspruch 1, **dadurch gekennzeichnet, dass** sie einen Positionssensor (171) aufweist, der in seinem Ausgangssignal den Hub der Hubspindel (141) abbildet.

**Claims**

1. A clocked adjusting unit (10, 310) having two linear pushing units (61, 91; 361, 391),

   wherein each of the linear pushing units (61; 91; 361; 391) has an actuating pawl (71; 101),
   wherein a rotatably mounted spindle nut (131) that controls a lifting spindle (141) can be driven by means of each of the actuating pawls (71; 101), and

wherein each individual linear pushing unit (61; 91; 361; 391) is assigned exactly one of two travel directions (145; 146) of the lifting spindle (141).

2. The clocked adjusting unit (10) according to Claim 1, **characterised in that** the individual linear pushing unit (61; 91; 361; 391) has a slide unit (62; 92; 362; 392) with an actuating pawl (71; 101) mounted pivotably therein.

3. The clocked adjusting unit (10) according to Claim 2, **characterised in that** the slide units (62, 92; 362, 392) and the spindle nut (131) are arranged in a common housing (21), out of which the lifting spindle (141) protrudes.

4. The clocked adjusting unit (10) according to Claim 3, **characterised in that** the lifting spindle (141) is part of a lifting spindle group (140), which has a lifting bar (151) and is guided in two guide pillars (161), which are mounted in the housing (21) by means of sliding bearing bushings (58).

5. The clocked adjusting unit (10) according to Claim 4, **characterised in that** the lifting bar (151) is springloaded in the lowering travel direction (146) relative to the housing (21) by means of two travel restoring springs (55).

6. The clocked adjusting unit (10) according to Claim 1, **characterised in that** each of the linear pushing units (61; 91; 361; 391) is single-action and has at least one slide restoring spring (64; 94; 364; 394).

7. The clocked adjusting unit (10) according to Claim 1, **characterised in that** the individual actuating pawl (71; 101) has a pushing flank (76; 106) and a return flank (81; 111).

8. The clocked adjusting unit (10) according to Claim 2, **characterised in that** the individual actuating pawl (71; 101) is loaded into a pushing position (73; 103) relative to a slide body (63; 93; 363; 393) of the slide unit (62; 92; 362; 392) by means of at least one pawl spring (72).

9. The clocked adjusting unit (10) according to Claim 1, **characterised in that** the spindle nut (131) has driving pins (135, 136), which can be contacted with the actuating pawls (71, 101).

10. The clocked adjusting unit (10) according to Claim 1, **characterised in that** it has a position sensor (171), the output signal of which reproduces the travel of the lifting spindle (141).

**Revendications**

1. Unité d'ajustement cadencée (10, 310), dotée de deux unités de poussée linéaires (61, 91 ; 361, 391),

chacune des unités de poussée linéaires (61 ; 91 ; 361 ; 391) comportant respectivement un cliquet d'actionnement (71 ; 101), un écrou de broche (131) logé en rotation, commandant une broche de levage (141) étant susceptible d'être entraîné au moyen de chacun des cliquets d'actionnement (71 ; 101) et à chacune des unités de poussée linéaires (61 ; 91 ; 361 ; 391) individuelles étant affectée précisément une de deux directions de course (145 ; 146) de la broche de levage (141).

2. Unité d'ajustement cadencée (10) selon la revendication 1, **caractérisée en ce que** l'unité de poussée linéaire (61 ; 91 ; 361 ; 391) individuelle dispose d'une unité de poussoir (62 ; 92 ; 362 ; 392), dotée d'un cliquet d'actionnement (71 ; 101) logé de manière pivotante dans celle-ci.

3. Unité d'ajustement cadencée (10) selon la revendication 2, **caractérisée en ce que** les unités de poussoir (62, 92 ; 362, 392) et l'écrou de broche (131) sont placés dans un carter (21) commun, hors duquel saillit la broche de levage (141).

4. Unité d'ajustement cadencée (10) selon la revendication 3, **caractérisée en ce que** la broche de levage (141) est une partie intégrante d'un groupe (140) de broches de levage, qui comporte une poutre de levage (151) et qui est guidé dans deux colonnes de guidage (161) logées dans le carter (21) au moyen de douilles de palier lisse (58).

5. Unité d'ajustement cadencée (10) selon la revendication 4, **caractérisée en ce que** la poutre de levage (151) est contrainte par ressort dans la direction de course (146) descendante par rapport au carter (21) au moyen de deux ressorts de rappel (55) de levage.

6. Unité d'ajustement cadencée (10) selon la revendication 1, **caractérisée en ce que** chacune des unités de poussée linéaires (61 ; 91 ; 361 ; 391) est conçue à action simple et dispose d'au moins un ressort de rappel (64 ; 94 ; 364 ; 394) de poussoir.

7. Unité d'ajustement cadencée (10) selon la revendication 1, **caractérisée en ce que** le cliquet d'actionnement (71 ; 101) individuel dispose d'un flanc de poussée (76 ; 106) et d'un flanc antiretour (81 ; 111).

**8.** Unité d'ajustement cadencée (10) selon la revendication 2, **caractérisée en ce que** le cliquet d'actionnement (71 ; 101) individuel est contraint dans une position de poussée (73 ; 103) au moyen d'au moins un ressort de cliquet (72) par rapport à un corps de poussoir (63 ; 93 ; 363 ; 393) de l'unité de poussoir (62 ; 92 ; 362 ; 392).

**9.** Unité d'ajustement cadencée (10) selon la revendication 1, **caractérisée en ce que** l'écrou de broche (131) dispose de tiges d'entraînement (135, 136) contactables avec les cliquets d'actionnement (71, 101).

**10.** Unité d'ajustement cadencée (10) selon la revendication 1, **caractérisée en ce qu'**elle comporte un capteur de position (171), qui dans son signal de sortie, reproduit ka course de la broche de levage (141).

**Fig. 1**

**Fig. 2**

170   66   60   22   97   90   96   49   47   48

43

42

**Fig. 3**

46 65 61 62 39 94 44 45 64 23 91 41 27 56

66 61 65 60 62 68 57 72 67 211 73 64, 94 120 121

90

91

92

96

**Fig. 4**

71 81 37 76 112 141 106 131 111 103 101

28  25  31  37  22  29

**Fig. 5**  36  32  34  26  33  24

62, 92  71, 101  64, 94

62, 92  67  69  64, 94

**Fig. 7**

65  63, 93  68  69  **Fig. 6**

132

82, 112  81, 111  77  78

76, 106  71, 101  79  75  74  **Fig. 8**

131  135, 136  134  133

**Fig. 9**

**Fig. 10**

**Fig. 11**

172 173 174 171 170 181 184

183

**Fig. 12**

131

137

66

61

198

195

194

197

196

91

201

202

193

192

191

**Fig. 13**

66 61 62 71 73 212 135 91

**Fig. 14**

22 136 131

62 71 213 101

**Fig. 15**

136 135 131

60 71 81 64, 94 90

**Fig. 16**

136 135 131

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1136175 A2
- DE 10063191 A1